Europäisches Patentamt

European Patent Office

Office européen des brevets

(19)

(11) **EP 0 690 556 B1**

## (12) EUROPÄISCHE PATENTSCHRIFT

(45) Veröffentlichungstag und Bekanntmachung des Hinweises auf die Patenterteilung:
**12.02.1997 Patentblatt 1997/07**

(51) Int Cl.$^6$: **H02P 1/30**

(21) Anmeldenummer: **94110231.1**

(22) Anmeldetag: **30.06.1994**

(54) **Stillstandserkennung beim Wiederanlassen eines stromrichtergespeisten Drehstrommotors ohne Drehzahlgeber**

Stop recognizing of inverter controlled motor without speed sensor by restarting

Reconnaissance de l'arrêt d'un moteur tournant alimenté par un onduleur sans capteur de vitesse, dans le cas d'un redémarrage

(84) Benannte Vertragsstaaten:
**DE FR GB**

(43) Veröffentlichungstag der Anmeldung:
**03.01.1996 Patentblatt 1996/01**

(73) Patentinhaber: **SIEMENS AKTIENGESELLSCHAFT**
**80333 München (DE)**

(72) Erfinder:
• **Schierling, Hubert, Dr.**
**D-91052 Erlangen (DE)**

• **Rebhan, Matthias, Dr.**
**D-90768 Fürth (DE)**

(56) Entgegenhaltungen:
**EP-A- 0 469 177**      **DE-A- 3 543 941**
**DE-A- 3 543 983**      **US-A- 4 451 112**

• **PATENT ABSTRACTS OF JAPAN vol. 18, no. 47 (E-1496) 25. Januar 1994 & JP-A-05 268 794**
• **PATENT ABSTRACTS OF JAPAN vol. 17, no. 85 (E-1322) 19. Februar 1993 & JP-A-04 281 389**

**Beschreibung**

Die Erfindung bezieht sich auf ein Verfahren und eine Vorrichtung zur Stillstandserkennung beim Wiederanlassen eines stromrichtergespeisten Drehstrommotors ohne Drehzahlgeber.

Ausfallzeiten in der Produktion entstehen dann, wenn der Umrichter, der einen Motor antreibt, nach kurzem Netzausfall oder nach dem Ausschalten nicht mehr eingeschaltet werden kann, weil sich der Motor noch nicht im Stillstand befindet. Wenn die Umrichterfrequenz nicht mit der Motorfrequenz der Asynchronmaschine übereinstimmt, kann sich nach dem Einschalten kein Fluß aufbauen. Im geregelten Betrieb kommt es dann zu sehr großen Stromamplituden, so daß der Umrichter mit Überstrommeldung erneut abschaltet. Besonders kritische Situationen entstehen, wenn der Umrichter beispielsweise nach kurzzeitigem Netzausfall automatisch wiedereingeschaltet wird, ohne daß die aktuelle Motordrehzahl bekannt ist.

Durch den Motor fließt ein umso größerer Strom, je größer der Unterschied zwischen der Ausgangsfrequenz des Stromrichtergerätes und der Motordrehzahl wird, sobald die Betriebsspannung ihren Wert wieder erreicht hat und der Stromrichter seinen Betrieb wiederaufgenommen hat. Aus diesem Grund muß für den Stromrichter eine große Leistung vorgesehen werden, was unwirtschaftlich ist.

Demgemäß fließt dann ein großer Anlaßstrom durch den Motor, wenn die Betriebsspannung eine relativ lange Zeit ausgefallen ist, die Drehzahl des Drehstrommmotors auf einen niedrigeren Wert gefallen ist und die Betriebsspannung plötzlich wieder mit gleicher Frequenz und gleicher Spannung wie vor dem Ausfall angelegt wird, da dann ein großer Unterschied zwischen der Ausgangsfrequenz des Stromrichters und der Motorumdrehungszahl entsteht. Diese Erscheinung tritt auch bei einer mit dem Betriebsspannungsausfall erfolgten Deaktivierung des Motors aus, der sich dann im Freilauf dreht, wenn dann die Betriebsspannung wieder an dem Motor mit gleicher Frequenz und gleichem Betrag wie vor dem Ausfall angelegt wird.

Um einen solchen hohen Motoranlaßstrom zu vermeiden, läßt man herkömmlicherweise den Drehstrommotor, nachdem er unabhängig von der Dauer des Stromausfalls angehalten wurde, wieder neu starten. Das Wiederanlassen des stillstehenden Drehstrommmotors wird durch allmähliche Erhöhung der Frequenz der an den Motor angelegten Betriebsspannung bewirkt, weshalb das Wiederanlassen und die Überführung des Motors in den Dauerbetrieb längere Zeit benötigt. Zur Vermeidung dieser Nachteile sind handelsübliche Stromrichtergeräte mit der Option "SUCHEN" und/ oder mit der Option "FANGEN" ausgerüstet.

Die Aufgabe einer Fangschaltung besteht vor allem darin, den Rotorfluß, der nach dem Abschalten des Umrichters entsprechend der Rotorzeitkonstanten nach einer e-Funktion abklingt, bei laufender Maschine wiederaufzubauen. Während des Flußaufbaus dürfen keine großen Beschleunigungs- und Bremsmomente auftreten. Der Flußaufbau ist nach definierter Zeit zu beenden und der geregelte bzw. gesteuerte Betrieb der Asynchronmaschine ist wiederaufzunehmen. Bei drehzahlgeregelten Antrieben ist der Motor nach dem "Fangen" wieder auf seine ursprüngliche Solldrehzahl zu führen. Die "Fangen"-Schaltung soll auch dann Anwendung finden, wenn der Motor nicht mit einem Tacho ausgestattet ist.

Aus der DE 32 02 906 C2 ist ein Verfahren und eine Vorrichtung zum Wiederanlassen eines Induktionsmotors bekannt. Dieses bekannte Verfahren ist dadurch gekennzeichnet, daß an dem Motor eine Spannung als Suchspannung angelegt wird, die zum Antrieb des Motors nicht ausreicht. Gleichzeitig wird die Frequenz des Stromrichters variiert. Während der Variation der Frequenz wird der Strom durch den freilaufenden Motor gemessen und die Frequenz der Suchspannung ermittelt, die mit der Drehzahl des freilaufenden Motors übereinstimmt. Diese so ermittelte Frequenz wird als Anfangsfrequenz festgelegt. Daraufhin wird an dem Motor eine Spannung angelegt, die nicht zum Antrieb des Motors ausreicht, wobei diese Spannung mit der Anfangsfrequenz geführt wird. Sodann wird von der Anfangsspannung aus bei Beibehaltung der Anfangsfrequenz die Spannung allmählich erhöht und dann die Frequenz und die Spannung auf vorgegebene Werte gesteigert, so daß der Motor normal betrieben wird. Durch dieses Verfahren wird ein hoher Motoranlaßstrom vermieden, der umso größer wird, je größer der Unterschied zwischen der Ausgangsfrequenz des Stromrichters und der Motordrehzahl wird.

Aus der DE 35 43 983 A1 ist ein Verfahren zum Zuschalten eines Umrichters auf eine noch drehende, nicht erregte Drehfeldmaschine bekannt, wobei der Statorwicklung vom Umrichter fortlaufend ein Sollstrom eingeprägt wird und wobei der Umrichter den möglichen Frequenzbereich in einem Suchlauf durchführt. Bei annähernder Übereinstimmung von Umrichterfrequenz und Läuferdrehzahl steigt die Statorspannung aufgrund des Flußaufbaus an. Dazu wird der Wert des Spannungsanstiegs der Statorspannung fortlaufend erfaßt, bis ein vorbestimmter Wert erreicht ist. Bei diesem Wert des Spannungsanstiegs der Statorspannung wird die Suchgeschwindigkeit vermindert. Das Schlupffrequenzfenster wird nun mit einer verminderten Suchgeschwindigkeit durchfahren. Dadurch baut sich in der Drehfeldmaschine ein Fluß auf. Sobald dieser Fluß einen vorbestimmten Wert erreicht hat, ist der beliebige momentane Betriebspunkt der zu suchenden Drehfeldmaschine gefunden und der Suchlauf ist beendet, so daß der Umrichter mit seiner Steuerung auf die noch drehende Drehfeldmaschine zugeschaltet werden kann. Mittels dieses Verfahrens kann die Suchgeschwindigkeit des Suchlaufes erheblich erhöht werden.

Aus der DE 35 43 941 A1 ist ein Verfahren zum Ermitteln der Drehzahl einer noch drehenden Drehfeldmaschine bekannt. Bei diesem Verfahren wird wenigstens eine der durch die Remanenz des Läufers in die Statorwicklungen induzierten, in ihrer Frequenz der Läuferdrehzahl entsprechenden Sinusspannung ausgewertet. Dadurch wird wenigstens eine Sinusspannung, die an einer Statorklemme ansteht, mittels eines Rechteckformers in eine symmetrisch verlaufende Rechteckspannung umgewandelt. Die Frequenz und die Phasenlage der Rechteckspannung stimmt mit der Frequenz und der Phasenlage der induzierten Sinusspannung überein. Anschließend wird aus dieser Rechteckspannung ein ihrer Frequenz proportionales Ausgangssignal gebildet. Da die Frequenz bzw. die Periodendauer dieser induzierten Sinusspannung nicht vom Maschinentyp oder der Maschinentemperatur abhängig ist, erhält man ein Verfahren, das allgemein bei Drehfeldmaschinen gilt. Durch die Bestimmung der Drehzahl der noch drehenden Drehfeldmaschine kann man einerseits den Umrichter mit der der Läuferfrequenz entsprechenden Frequenz auf die noch drehende Drehfeldmaschine zuschalten und andererseits ist die Dauer des Suchlaufs erheblich vergrößert, weil bei diesem Verfahren die Suchgeschwindigkeit nicht mehr von dem Frequenzfenster der Drehfeldmaschine abhängig ist.

Aus der EP 0 469 177 A1 ist ein weiteres Verfahren und eine Vorrichtung zum Wiederanlassen eines Induktionsmotors bekannt. Bei diesem Verfahren werden wenigstens zwei Remanenzfrequenzwerte aus zu unterschiedlichen Zeitpunkten gemessenen Remanenzspannungswerten ermittelt, aus denen dann ein Beschleunigungswert des "austrudelnden" Motors bestimmt wird. Am Ende dieser genannten Beschleunigungsmessung wird der Ausgangsfrequenzwert auf den letzten ermittelten Remanenzfrequenzwert dieser Beschleunigungsmessung gesetzt. An diese Beschleunigungsmessung schließt sich das "Fangen" des Motors an. Das "Fangen" findet während einer einstellbaren Erregungszeit statt. Mit dem Start der Erregungszeit sind die Wechselrichterimpulse freigegeben. Mit der Freigabe der Wechselrichterimpulse geht sofort die Remanenz der Maschine verloren. Deshalb wird während der Erregungszeit ausgehend vom gesetzten Ausgangsfrequenzwert des Stromrichters der Ausgangsfrequenzwert mit dem ermittelten Beschleunigungswert interpoliert, so daß der Ausgangsfrequenzwert dem Drehzahl-Istwert der infolge eines Trägheitsmoments drehenden Maschine nachgeführt wird. Somit stellt die Interpolation des Ausgangsfrequenzwertes des Stromrichters eine Nachbildung des Drehzahl-Istwertes der "austrudelnden" Maschine dar, d.h., es wird eine Meßwertersatzgröße ermittelt. Gleichzeitig wird während der Erregungszeit der Maschinenfluß durch Hochsteuern des Ausgangsspannungswertes des Frequenzwandlers aufgebaut. Sobald die eingestellte Erregungszeit abgelaufen ist, wird der Zustand "Fangen" verlassen und in den Regelungsbetrieb gewechselt. Dabei wird vom letzten ermittelten interpolierten Ausgangsfrequenzwert des Frequenzwandlers ausgehend die Drehzahl entsprechend einer eingestellten Hochlaufzeit wieder auf die ursprüngliche Drehzahl geführt.

Um die Momentenbildung während des Fangvorgangs so gering wie möglich zu halten, sollte der Motor beispielsweise 90% seiner Magnetisierung abgebaut haben. Die Entregungszeit, die mit dem Ausschalten des Stromrichters gestartet wird, wird deshalb auf das 2,3-fache der Läuferzeitkonstante eingestellt.

Während der einstellbaren Beschleunigungsmeßzeit wird die Steigung zwischen dem ersten und dem letzten ermittelten Remanenzfrequenzwert errechnet. Je kürzer die Meßzeit, umso schneller wird die Maschine gefunden. Die Beschleunigungsmeßzeit wird in eine Anzahl von Perioden der Remanenzspannung umgerechnet, so daß sich mit ändernder Drehzahl die tatsächliche Beschleunigungsmeßzeit geringfügig mitändert. Die Beschleunigungsmeßzeit soll wenigstens der Zeit zweier Perioden der Remanenzdrehzahl entsprechen.

Mittels der einstellbaren Erregungszeit kann die Dauer des Flußaufbaus bestimmt werden. Je länger die einstellbare Erregungszeit ist, umso momentenfreier arbeitet die "Fangen"-Schaltung. Je kürzer die Erregungszeit ist, umso schneller erfolgt der Stromanstieg und der Übergang zum Regelungsbetrieb.

Der Nachteil dieser bekannten Verfahren besteht darin, daß nicht ohne großen Aufwand die Drehzahl einer noch drehenden Drehfeldmaschine gefunden oder gefangen werden kann, wenn die Drehzahl sehr klein ist. Bei sehr kleinen Drehzahlen der "austrudelnden" Maschine wird der Suchvorgang nach ein paar Durchlaufen mit dem Ergebnis "Maschine nicht gefunden" abgebrochen. Das bedeutet für den Bediener, die Maschine stillzusetzen und neu zu starten. Dies nimmt viel Zeit in Anspruch.

Außerdem beeinflussen bei sehr kleinen Frequenzen des Antriebs die Ständer- und Zuleitungswiderstände die Spannungsvorgaben, wodurch sich die Genauigkeit des "Suchens" bzw. des "Fangens" der Drehfeldmaschine verschlechtert. Die Folge ist, daß unterhalb einer Drehzahl diese Optionen "SUCHEN" bzw. "FANGEN" nicht mehr eingesetzt werden können bzw. bei Anwendung dieser Optionen der Umrichter in Störung geht.

Der Erfindung liegt nun die Aufgabe zugrunde, ein Verfahren zur Stillstandserkennung beim Wiederanlassen eines stromrichtergespeisten Drehstrommotors ohne Drehzahlgeber anzugeben. Diese Aufgabe wird erfindungsgemäß gelöst mit den im Anspruch 1 angegebenen Verfahrensschritten.

Das erfindungsgemäße Verfahren ist in zwei aktive Phasen unterteilt, die mittels einer passiven Phase gekoppelt sind. Während der aktiven Phase werden die Zeitverläufe des Motorstromes gemessen und dessen Zeitverläufe der orthogonalen Stromkomponenten aufgezeichnet. Damit diese Stromkomponenten einen drehzahlcharakteristischen Verlauf erhalten, wird in der ersten aktiven Phase (Aufmagnetisierungsphase) in einer Phase des Drehstrommotors ein Gleichstrom eingeprägt. In Abhängigkeit der Drehzahl des noch drehenden Drehstrommotors baut sich ein Fluß im Läufer des Motors auf. In der zweiten aktiven Phase (Kurzschlußphase) wird die Maschine an ihren Klemmen kurzgeschlossen. Abhängig davon, ob sich in der ersten aktiven Phase ein nennenswerter Fluß aufbauen konnte oder nicht, treten in dieser Phase charakteristische Stromverläufe auf. Die passive Phase (Leerlaufphase) entkoppelt die beiden aktiven Phasen voneinander. Die Dauer der Leerlaufphase kann sehr kurz gewählt werden. Durch die Leerlaufphase wird der Ständerstrom zu Null gemacht, so daß in der Kurzschlußphase nicht erst noch die Ständerzeitkonstante abgewartet werden muß.

Somit erhält man zunächst vier Zeitverläufe von Stromkomponenten des Motorstromes während der beiden aktiven Phasen des Verfahrens. Um nun eine Aussage über den Stillstand zu treffen, reicht es bereits aus, wenn nur der Zeitverlauf einer orthogonalen Stromkomponente weiterverarbeitet wird. Diese Bearbeitung besteht darin, daß aus dem Zeitverlauf der Wirkstromkomponente (orthogonale Stromkomponente in Ständerspannungsrichtung) der zweiten aktiven Phase ein Mittelwert gebildet wird. Dieser gebildete Mittelwert wird mit einem vorbestimmten Grenzwert verglichen. Außerdem wird der Augenblickswert der Wirkstromkomponente am Ende der zweiten aktiven Phase mit einem vorbestimmten Grenzwert verglichen. Werden beide Grenzwerte überschritten, so steht fest, daß der stromrichtergespeiste Drehstrommotor stillsteht.

Mit der Feststellung, daß der Drehstrommotor stillsteht, kann man umgehend die Regelung des Stromrichters aktivieren, so daß der Drehstrommotor neu gestartet wird. Mittels diesem erfindungsgemäßen Verfahren kann man mit Hilfe von Strommessungen sehr schnell feststellen, ob der stromrichtergespeiste Drehstrommotor ohne Drehzahlgeber stillsteht. Dadurch verringert sich die Ausfallzeit in der Produktion und der Stromrichter geht bei kleinen Drehzahlen nicht mehr in Störung.

Bei einem vorteilhaften Verfahren werden die aufgezeichneten Verläufe der Blindstromkomponente der ersten aktiven Phase, die Wirkstromkomponente und die Blindstromkomponente der zweiten aktiven Phase derart ausgewertet, daß bei Überschreitung der gebildeten Mittelwerte dieser Stromkomponentenbeträge jeweils über einen vorbestimmten Grenzwert feststeht, daß der Drehstrommotor stillsteht. Durch diese zusätzliche Bearbeitung dieser aufgezeichneten Stromkomponenten wird die Genauigkeit der Stillstandserkennung erhöht.

Bei einem weiteren vorteilhaften Verfahren wird der Gleichstrom mittels des Stromrichters gesteuert eingeprägt, indem diesem Stromrichter eine Stellgröße zugeführt wird, deren Amplitude in Abhängigkeit des Motornennstromes und eines Gesamtwiderstandes des Antriebs vorbestimmt ist. Der Stromrichter erzeugt durch Pulsen einen Spannungsraumzeiger des Betrages gleich der Amplitude der Stellgröße und der Frequenz 0 Hz. Diese gesteuerte Gleichspannung führt zu einem drehzahlcharakteristischen Stromaufbau. Steht der Drehstrommotor oder dreht er nur mit sehr kleiner Drehzahl, so wird durch den Gleichstrom ein Fluß im Läufer der Maschine induziert; bei mit hoher Drehzahl drehender Maschine ist dies nicht der Fall. Die Zeitdauer der ersten aktiven Phase ist abhängig von der Höhe der gesteuerten Gleichspannung und sollte zumindestens so hoch sein, daß sich ein stationärer Stromendwert einstellen kann.

Bei einem weiteren vorteilhaften Verfahren wird der Gleichstrom mittels des Stromrichters geregelt eingeprägt, indem diesem Stromrichter eine Stellgröße zugeführt wird, die gleich einer Stellgröße einer Stromregelung ist, mit der der Motorstrom auf einen Stromsollwert geregelt wird. Bei dieser Aufmagnetisierung des Drehstrommotors erhält man keinen drehzahlcharakteristischen Stromaufbau. Somit entfällt für die erste aktive Phase die Aufzeichnung der Zeitverläufe von orthogonalen Stromkomponenten des gemessenen Motorstromes. Da für die Stillstandserfassung die Zeitverläufe der Stromkomponenten der ersten aktiven Phase nicht benötigt werden, vereinfacht sich das Verfahren und die zugehörige Vorrichtung zur Durchführung des Verfahrens.

Bei einem weiteren vorteilhaften Verfahren wird der aufgezeichnete Zeitverlauf der Blindstromkomponente der ersten aktiven Phase und der aufgezeichnete Zeitverlauf der Blindstromkomponente der zweiten aktiven Phase derart ausgewertet, daß bei einem negativen Vorzeichen des Augenblickswertes der Blindstromkomponente am Anfang der ersten aktiven Phase und bei einem positiven Vorzeichen des Augenblickswertes der Blindstromkomponente am Anfang der zweiten aktiven Phase ein rechts herum drehender Motor vorliegt bzw. bei umgekehrtem Vorzeichen dieser Augenblickswerte ein links herum drehender Motor vorliegt. Somit erhält man mit einer zusätzlichen einfachen Auswertung der vorliegenden aufgezeichneten Zeitverläufe der orthogonalen Stromkomponenten des gemessenen Motorstromes zum Verfahren der Stillstandserkennung auch noch ein Verfahren zur Drehrichtungserkennung, das bei negativer Stillstandserkennung aktiviert wird.

Bei einem weiteren vorteilhaften Verfahren wird aus den aufgezeichneten Zeitverläufen der Blindstromkomponenten der ersten und zweiten aktiven Phase und aus dem aufgezeichneten Zeitverlauf der Wirkstromkomponente der zweiten aktiven Phase mittels arithmetischer Operationen je ein Frequenzwert errechnet, die miteinander verglichen werden, wobei bei annähernder Gleichheit eine Startfrequenz für ein Suchverfahren bestimmt wird, deren Wert größer ist als der arithmetische Mittelwert oder der größte der errechneten Frequenzwerte während der zweiten aktiven Phase. Somit erhält man mit einer zusätzlichen Auswertung der vorhandenen aufgezeichneten Zeitverläufe der orthogonalen Stromkomponenten des gemessenen Motorstromes zum Verfahren der Stillstandserkennung auch noch ein Verfahren zur Festlegung einer Startfrequenz eines Suchvorgangs.

Durch die erfindungsgemäße Aufbereitung und Abspeicherung eines gemessenen Motorstromes während zweier aktiver Phasen (Aufmagnetisierungs- und Kurzschlußphase), in denen sich der Antrieb in zwei Betriebspunkten befindet, erhält man eine Vielzahl von Informationen über den Ist-Zustand eines stromrichtergespeisten Drehstrommotors ohne Drehzahlgeber beim Wiederanlassen, die mit unterschiedlichen Auswerteverfahren wiedergewonnen werden. Somit kann man nach kurzer Zeit den Drehstrommotor wieder neu starten, wodurch sich die Ausfallzeiten in der Produktion verringern.

Zur weiteren Erläuterung der Erfindung wird auf die Zeichnung Bezug genommen, in der ein Ausführungsbeispiel einer Vorrichtung zur Durchführung des erfindungsgemäßen Verfahrens schematisch veranschaulicht ist.

| | |
|---|---|
| Figur 1 | zeigt ein Blockschaltbild der Vorrichtung zur Durchführung des erfindungsgemäßen Verfahrens zur Stillstandserkennung, in den |
| Figuren 2 bis 4 | sind jeweils in einem Diagramm über der Zeit die Verläufe der Spannung, der Impuls-Freigabe und des Phasenstromes während des erfindungsgemäßen Verfahrens dargestellt, die |
| Figur 5 | zeigt den Stromverlauf durch einen Wechselrichter während der ersten aktiven Phase des erfindungsgemäßen Verfahrens, die |
| Figur 6 | zeigt den Stromverlauf durch einen Wechselrichter während der zweiten aktiven Phase des erfindungsgemäßen Verfahrens, in |
| Figur 7 | ist ein Flußdiagramm des erfindungsgemäßen Verfahrens dargestellt und in den |
| Figuren 8 bis 10 | sind jeweils in einem Diagramm über der Zeit t die Zeitverläufe der Stromkomponenten eines gemessenen Motorstromes während der aktiven Phasen bei Stillstand, bei geringer Drehzahl und bei Nenndrehzahl des Drehstrommotors dargestellt. |

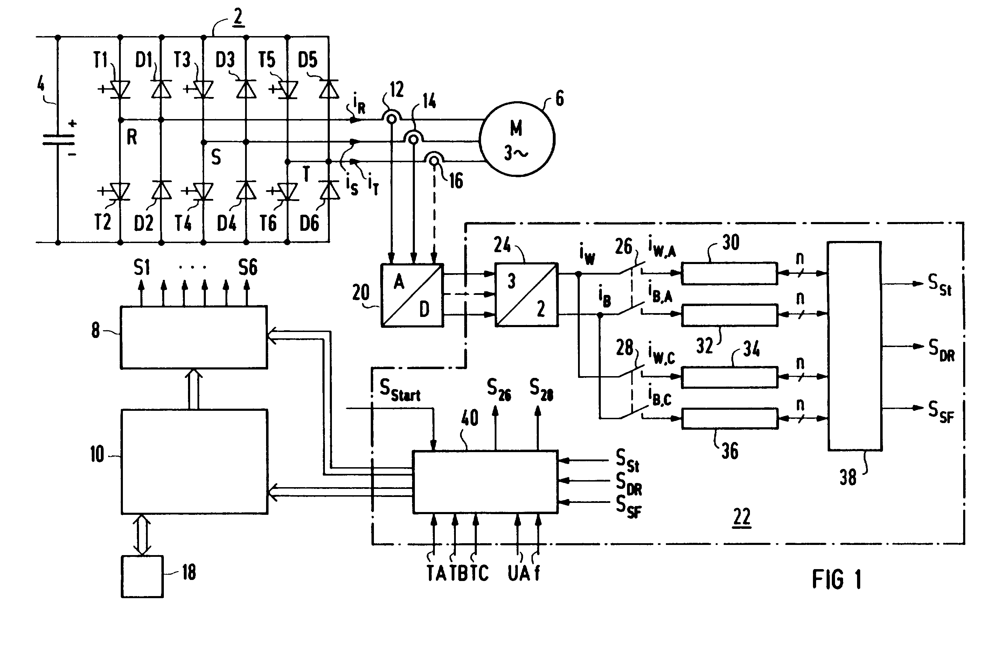

Die Figur 1 zeigt das Ersatzschaltbild eines maschinenseitigen Stromrichters 2, auch Wechselrichter genannt, der abschaltbare Leistungshalbleiter T1 bis T6, beispielsweise abschaltbare Thyristoren aufweist. Anstelle der abschaltbaren Thyristoren T1 bis T6 können auch Leistungstransistoren verwendet werden. Eingangsseitig ist dieser Wechselrichter 2 mit einem Spannungszwischenkreis 4 verbunden. Dieser Spannungszwischenkreis 4 wird eingangsseitig mittels eines netzseitigen Stromrichters, auch Gleichrichter genannt, aus einem Drehstromnetz gespeist. Auch eine direkte Gleichspannungsspeisung (Industrienetz, "DC-Schiene") ist möglich und üblich. Wegen der Übersichtlichkeit sind diese nicht dargestellt. Ausgangsseitig ist ein Drehstrommotor 6 ohne Drehzahlgeber angeschlossen. Zu den abschaltbaren Thyristoren T1 bis T6 sind jeweils Freilaufdioden D1 bis D6 elektrisch parallel geschaltet. Im Betrieb werden die Wechselrichterphasen so angesteuert, daß die Ausgangsklemmen R, S und T des Wechselrichters 2 abwechselnd an das Plus- oder Minuspotential des Spannungszwischenkreises 4 gelegt werden. Bei diesem Pulsumrichter 2 müssen für einen bestimmten Betriebszustand Spannung und Frequenz in geeigneter Weise vorgegeben werden. Dies wird durch Modulation der tatsächlich einstellbaren Spannungsraumzeiger realisiert (Pulsbreitenmodulation). Dazu weist das teilweise dargestellte Stromrichtergerät eine Ansteuerbaugruppe 8, auch Modulator genannt, eine Regelungsbaugruppe 10 und Meßwerteinrichtungen für Strom und Spannung auf, von denen nur die Meßwerteinrichtungen 12, 14 und 16 zur Erfassung der Wechselrichterausgangsströme $i_R$, $i_S$ und $i_T$ dargestellt sind. Für die Ermittlung des Motorstromes i genügen auch schon zwei Meßwerteinrichtungen 12 und 14.

Die Steuerung und Regelung dieses bekannten Pulsumrichters ist voll digitalisiert. Alle Funktionen einschließlich Steuersatz, Bedienerführung und umfangreiche Schutzfunktionen werden über ein bzw. zwei 16-Bit-Mikroprozessoren abgearbeitet. Als Regelvarianten sind eine Frequenzsteuerung (U/F-Kennlinie), eine Vektorregelung als Drehzahlregelung und eine Vektorregelung als Momentenregelung vorgesehen. In dem Siemens-Prospekt "SIMOVERT P Spannungszwischenkreis-Umrichter 6SE35/36 und 6SC36/37 für Antriebe bis 900 kW", Bestell-Nr. A 19100-E319-A371, 1989, ist dieser ausschnittsweise dargestellte Pulsumrichter ausführlich beschrieben. Diesem Prospekt ist auch ein Übersichtsschaltbild einer Frequenz-/Drehzahlregelung zu entnehmen. Der Siemens-Prospekt "SIMOVERT P Spannungszwischenkreis-Umrichter 6SE12 für Antriebe bis 37 kW", Bestell-Nr. A 19100-E319-A400, 1990, ist eine weitere Ausführungsform der Regelungsbaugruppe 10 zu entnehmen. Bei dieser Regelungsbaugruppe sind die Funktionen Ablaufsteuerung und Bedienung, feldorientierte Regelung und unterlagerte Phasenstromregelung zusammengefaßt. Außerdem befindet sich auf dieser Baugruppe die Steuerklemmleiste, die Schnittstelle zum Bedienfeld und eine weitere Schnittstelle. Am Ausgang der Regelungsbaugruppe 10 steht ein umlaufender Spannungszeiger als Stellgröße an, die der Ansteuerbaugruppe 8 zugeführt wird. Über die Ansteuerbaugruppe 8 werden von der Regelung erzeugten Stellgrößen potentialgetrennt in entsprechende Ein-/Ausbefehle für die Leistungshalbleiter T1 bis T6 des Wechselrichters 2 umgesetzt. Dieser bekannte Pulsumrichter weist noch ein Bedienfeld 18 auf, über das sich alle Einstellungen und Funktionen des Pulsumrichters realisieren lassen, wie Parametrierung, Inbetriebsetzung und Vorgabe von Sollwerten. Da die Steuerung und Regelung voll digitalisiert ist, ist den Meßwerteinrichtungen 12, 14 und 16 ein Analog-Digital-Wandler 20 nachgeschaltet.

Außerdem ist dieser Umrichter noch mit einer Vorrichtung 22 zur Durchführung des Verfahrens zur Stillstandserkennung bei Wiederanlassen dieses stromrichtergespeisten Drehstrommotors 6 ohne Drehzahlgeber versehen.

Diese Vorrichtung 22 umfaßt einen Koordinatenwandler 24, zwei Doppelschalter 26 und 28, vier Speichereinheiten 30, 32, 34 und 36, eine Auswerteeinrichtung 38 und eine Ablaufsteuerung 40. Der Koordinatenwandler 24 ist eingangsseitig mit dem Analog-Digital-Wandler 20 und ausgangsseitig jeweils mit einem Doppelschalter 26 und 28 verbunden, deren Ausgänge jeweils mit einer Speichereinheit 30,...,36 verknüpft sind. Die Ausgänge dieser Speichereinheiten 30,...,36 sind mit der Auswerteeinrichtung 38 elektrisch leitend verbunden. Die Ausgangssignale $S_{St}$, $S_{DR}$ und $S_{SF}$ dieser Auswerteeinrichtung 38 werden der Ablaufsteuerung 40 zugeführt, der ebenfalls ein Startsignal $S_{Start}$ und Parameter TA, TB, TC, UA und f für die Initialisierung des erfindungsgemäßen Verfahrens zur Stillstanderkennung zugeführt werden. Diese Ablaufsteuerung 40 generiert Schaltsignale $S_{26}$ und $S_{28}$ für die Doppelschalter 26 und 28 und Steuersignale für die Ansteuerbaugruppe 8 und die Regelungsbaugruppe 10 des bekannten Stromrichtergerätes. Der Koordinatenwandler 24 erzeugt aus den digitalisierten Meßwerten der Wechselrichterausgangsströme $i_R$ und $i_S$ bzw. $i_R$, $i_S$ und $i_T$ orthogonale Stromkomponenten $i_W$ und $i_B$ eines Motorstromes i eines ständerfesten kartesischen Koordinatensystems $\alpha$, $\beta$. Dabei fällt die Stromkomponente $i_W$ mit der $\alpha$-Achse dieses kartesischen Koordinatensystems $\alpha$, $\beta$ zusammen, wobei die $\alpha$-Achse mit dem Ständerspannungs-Raumzeiger der Drehstrommaschine 6 zusammenfällt. Deshalb wird die orthogonale Stromkomponente als $i_W$ als Wirkstrom und die Stromkomponente $i_B$, die mit der $\beta$-Achse des kartesischen Koordinatensystems $\alpha$, $\beta$ zusammenfällt, als Blindstrom des Motorstromes i bezeichnet. Da auf der Regelbaugruppe 10 bereits auf den digitalisierten Meßwerten der Wechselrichterausgangsströme $i_R$ und $i_S$ zwei orthogonale Stromkomponenten $i_W$ und $i_B$ des Motorstromes i bestimmt werden, kann der Koordinatenwandler 24 bei der Vorrichtung 22 eingespart werden. Dafür können die orthogonalen Stromkomponenten $i_W$ und $i_B$ der Regelbaugruppe 10 über die Ablaufsteuerung 40 an die Eingänge der beiden Doppelschalter 26 und 28 gelegt werden. Als Auswerteeinrichtung 38 kann ein Mikroprozessor vorgesehen werden, der gleichzeitig die Funktion der Ablaufsteuerung 40 realisiert. Bei einer bevorzugten Ausführungsform wird die Vorrichtung 22 durch einen Mikroprozessor realisiert. Sind die beiden 16-Bit-Mikroprozessoren der Steuerung und Regelung des bekannten Stromrichtergerätes noch nicht voll ausgelastet, so wird für die Vorrichtung 22 kein separater Mikroprozessor mehr gebraucht, da dann das erfindungsgemäße Verfahren in die Steuerung und Regelung des bekannten Stromrichtergerätes als Software-Programm integriert wird.

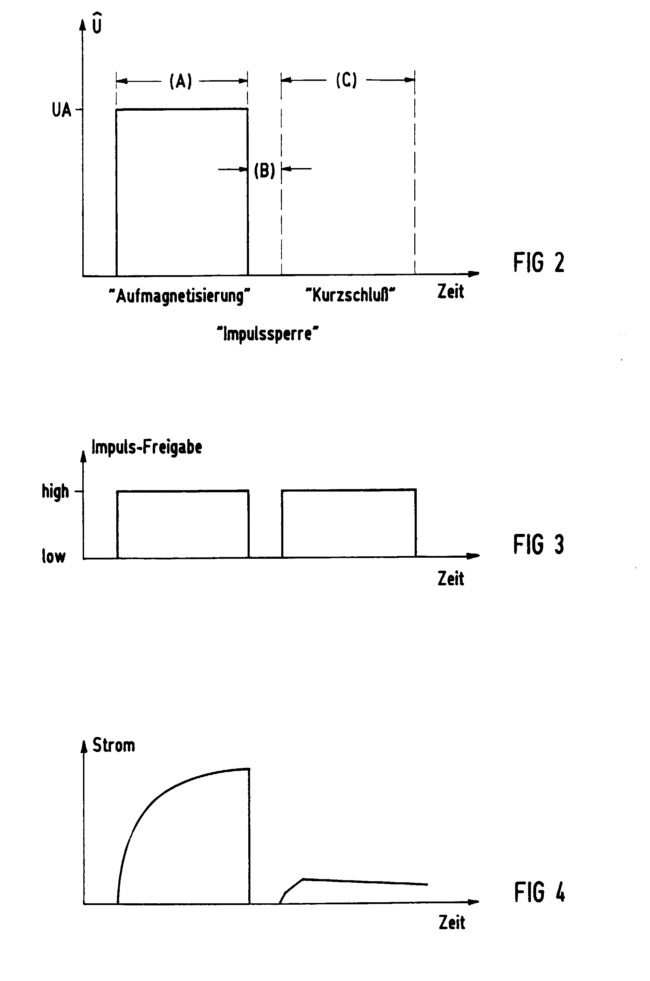

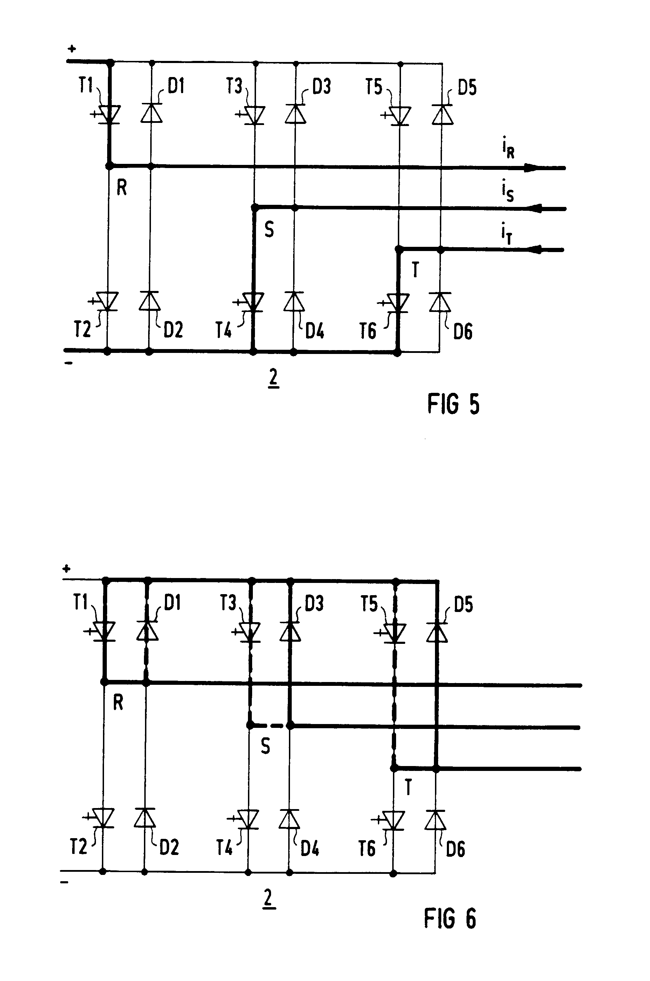

Das erfindungsgemäße Verfahren zur Stillstanderkennung ist in drei Phasen A, B und C unterteilt. Diese Phasen sind eine erste aktive Phase A, eine passive Phase B und eine zweite aktive Phase C. Während der aktiven Phase A, auch Aufmagnetisierungsphase genannt, wird eine Gleichspannung UA an den Maschinenklemmen angelegt (Figur 2). Dazu wird von der Ablaufsteuerung 40 ein Spannungsraumzeiger mit dem Betrag UA und der Frequenz 0 Hz der Ansteuerbaugruppe 8 des Wechselrichters 2 zugeführt. Diese Ansteuerbaugruppe 8 erzeugt daraus Steuersignale S1,...,S6, so daß die abschaltbaren Leistungshalbleiter T1, T4 und T6 leitend sind (Figur 5). Dadurch fließt in Phase R des Drehstrommotors ein Gleichstrom (Figur 4). Während dieser aktiven Phase A ist der Doppelschalter 26 geschlossen, wogegen der Doppelschalter 28 geöffnet ist. Während der ersten aktiven Phase A werden die Zeitverläufe der orthogonalen Stromkomponenten $i_{W,A}$ und $i_{B,A}$ fortlaufend jeweils in einer Speichereinheit 30 und 32 aufgezeichnet. Während der passiven Phase B, auch Übergangsphase bzw. Leerlaufphase genannt, wird der Wechselrichter 2 nicht angesteuert, d.h., die Steuersignale S1,...,S6 sind gesperrt (Figur 3). Bei der anschließenden zweiten aktiven Phase C, auch Kurzschlußphase genannt, wird die Maschine 6 an ihren Klemmen kurzgeschlossen (Figur 2). Dies wird mittels des Wechselrichters 2 mittels eines sogenannten Nullzeigers realisiert. Dazu erzeugt die Ansteuerbaugruppe 8 derartige Steuersignale S1,...,S6, daß die abschaltbaren Leistungshalbleiter einer Brückenhälfte (beispielsweise T1, T3 und T5) des Wechselrichters 2 gezündet werden (Figur 6). Abhängig davon, ob sich in der ersten aktiven Phase A ein nennenswerter Fluß aufbauen konnte oder nicht, tritt ein typischer Stromverlauf auf (Figur 4). Während dieser zweiten aktiven Phase C ist der Doppelschalter 28 geschlossen, wogegen der Doppelschalter 26 geöffnet ist. Während der zweiten aktiven Phase C werden die Zeitverläufe der orthogonalen Stromkomponenten $i_{W,C}$ und $i_{B,C}$ fortlaufend jeweils in einer Speichereinheit 34 und 36 aufgezeichnet.

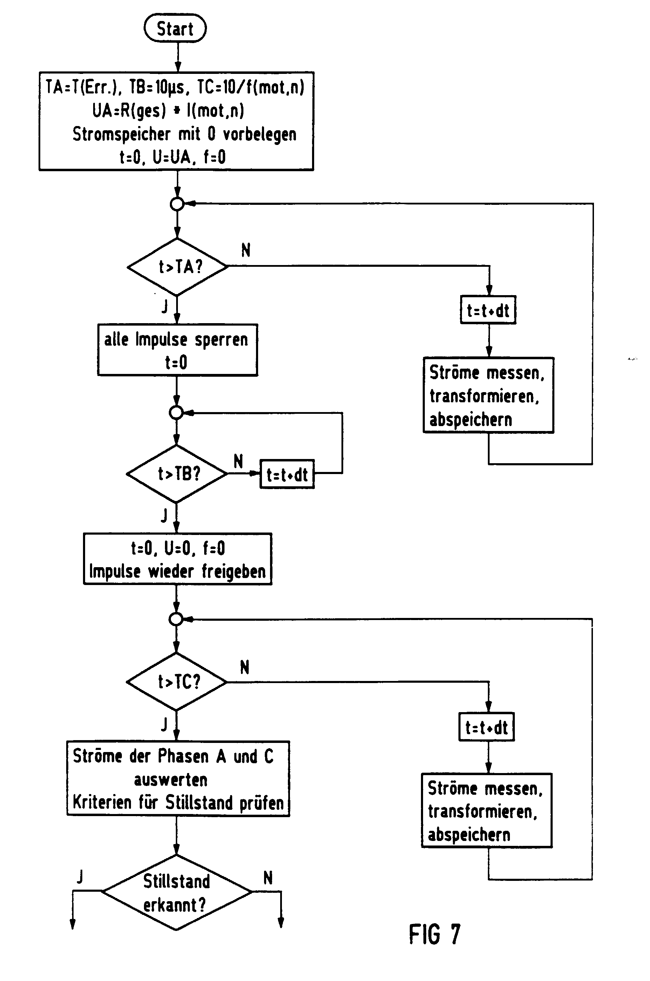

Das erfindungsgemäße Verfahren zur Stillstanderkennung wird anhand des Blockschaltbildes gemäß Figur 1 und des Flußdiagramms gemäß Figur 7 im folgenden näher beschrieben:

Bei der Inbetriebnahme des Antriebs können die Parameter für die Initialisierung des Verfahrens mit dem Bedienfeld 18 in die Ablaufsteuerung 40 der Vorrichtung 22 gelesen werden. Die Parameter des erfindungsgemäßen Verfahrens sind die Zeitdauern TA, TB und TC der Phasen A, B und C, die Amplitude UA der Gleichspannung und der Frequenzwert 0 Hz. Die Zeitdauer TA der ersten aktiven Phase A ist abhängig von der Amplitude UA der Gleichspannung und sollte mindestens so groß gewählt werden, daß sich ein stationärer Stromendwert einstellen kann (Figur 3). Diese Zeitdauer TA muß größer als 100 ms sein, kann aber auch mehrere Sekunden betragen. Wie groß die Zeitdauer TA ist, hängt außerdem von der Leistung der Maschine 6 ab. Als Richtwert kann man die Summe aus Ständerzeitkonstante und Läuferzeitkonstante wählen. Die Zeitdauer TB der passiven Phase B kann sehr kurz gewählt werden, beispielsweise <10 ms (Figur 2). Bei dieser passiven Phase B soll die Ständerzeitkonstante der Drehstrommaschine 6 übergangen werden, so daß die beiden aktiven Phasen A und C voneinander entkoppelt sind. Für die Zeitdauer TC kann man den mehrfachen Reziprokwert der Nennfrequenz, beispielsweise $10 \cdot 1/f_n$ ansetzen. Die Amplitude UA der Gleichspannung entspricht dem Spannungsabfall am Gesamtwiderstand des Antriebs bei Nenngleichstrom-Einspeisung. Auch dieser Wert ist vom Antrieb abhängig.

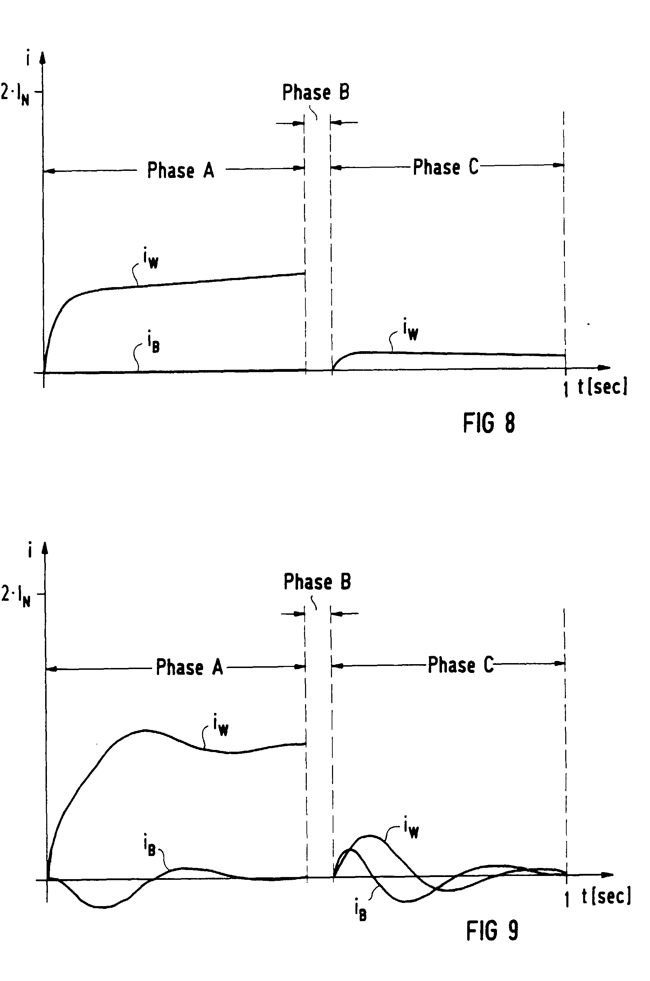

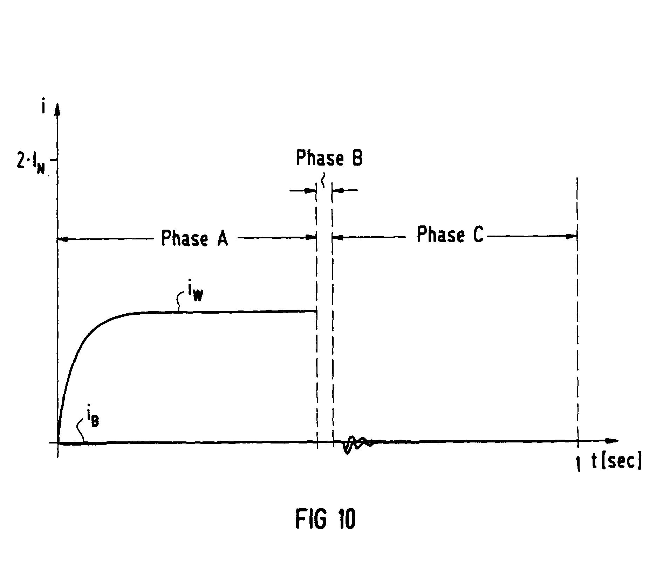

Mit dem Startsignal $S_{Start}$ werden diese Parameter aktiviert, die Speichereinheiten 30,...,36 und die Zeit auf Null gesetzt und der Doppelschalter 26 geschlossen. Während der Phase A wird mit jedem Takt die verstrichene Zeit mit der Zeitdauer TA verglichen und die orthogonalen Stromkomponenten $i_{W,A}$ und $i_{B,A}$ (Figuren 8 bis 10) jeweils in die Speichereinheit 30 und 32 geschrieben. Sobald die abgelaufene Zeit gleich der Zeitdauer TA ist, werden alle Impulse gesperrt und die Zeit wieder auf Null gesetzt. Mit der Impulssperre wird auch der Doppelschalter 26 wieder geöffnet. Damit beginnt die passive Phase B, in der nur die verstreichende Zeit mit der vorbestimmten Zeitdauer TB verglichen wird. Ist die verstreichende Zeit in der passiven Phase B gleich der vorbestimmten Zeitdauer TB, so wird die Zeit, der Amplitudenwert der Gleichspannung und der Frequenzwert auf Null gesetzt und der Doppelschalter 28 geschlossen. Während der dargestellten Zeitschleife werden bei jedem Takt orthogonale Stromkomponenten $i_{W,C}$ und $I_{B,C}$ (Figuren 8 bis 10) in der Speichereinheit 34 und 36 abgespeichert. Am Ende der aktiven Phase C wird der Doppelschalter 28 wieder geöffnet und das Auswerteprogramm gestartet.

Am Ende der drei Phasen A, B und C enthalten die Speichereinheiten 30,...,36 jeweils die Zeitverläufe der Stromkomponenten $i_{W,A}$, $i_{B,A}$ der Phase A und die Zeitverläufe der Stromkomponenten $i_{W,C}$, $i_{B,C}$ der Phase C (Figuren 8 bis 10).

Die Auswerteeinrichtung 38 bildet aus dem Zeitverlauf der Wirkstromkomponente $i_{W,C}$ gemäß der Gleichung

$$\overline{I_{W,C}} = \frac{1}{N} \sum_{n=1}^{N} i_{W,C\,n} > 0,015 * I_{mot,n}$$

einen Mittelwert und vergleicht diesen mit einem Grenzwert, beispielsweise $0{,}015 \cdot I_{mot,n}$. Außerdem wird gemäß Gleichung

$$I_{W,C|t=TC} > 0$$

der Endwert der Wirkstromkomponente $I_{W,C}$ in der Phase C mit einem Grenzwert verglichen. Übersteigt der Mittelwert $\overline{I_{W,C}}$ der Wirkstromkomponente $i_{W,C}$ in der zweiten aktiven Phase C einen vorbestimmten Anteil des Nennstromes $I_{mot,n}$ des Drehstrommotors 6 und ist der Endwert $I_{W,C}$ der Stromkomponente $i_{W,C}$ der Phase C positiv, so steht fest, daß der Drehstrommotor 6 stillsteht. Somit wechselt das Signal $S_{St}$ am Ausgang der Auswerteeinrichtung 38 von low nach high, wodurch der Neustart des Motors 6 aktiviert wird. Wird eine dieser Bedingungen nicht erfüllt, steht die Maschine 6 nicht still.

Um die Genauigkeit noch weiter zu steigern, können die folgenden zusätzlichen Bedingungen gemäß den Gleichungen

$$\overline{|I_{B,A}|} = \frac{1}{N} \sum_{n=1}^{N} |i_{B,A\,n}| > \text{Schwelle}$$

$$\overline{|I_{W,C}|} = \frac{1}{N} \sum_{n=1}^{N} |i_{W,C\,n}| > \text{Schwelle}$$

$$\overline{|I_{B,C}|} = \frac{1}{N} \sum_{n=1}^{N} |i_{B,C\,n}| > \text{Schwelle}$$

überprüft werden. Dabei werden jeweils der Mittelwert des Blindstrombetrages in Phase A, des Blindstrombetrages in Phase C und des Wirkstrombetrages in Phase C berechnet. Übersteigt jeder Mittelwertbetrag $|\overline{I_{B,A}}|, |\overline{I_{W,C}}|, |\overline{I_{B,C}}|$ einen vorbestimmten Schwellwert, so steht der Drehstrommotor 6 still.

Steht der Drehstrommotor 6 nicht still, so wird nicht in den Umrichterzustand "Betrieb", in dem von f=0 bis f=f$_{soll}$ geregelt hochgefahren wird, sondern in den Umrichterzustand "SUCHEN" geschaltet.

Da in den aufgezeichneten Zeitverläufen der Stromkomponenten $i_{W,A}$, $i_{B,A}$, $i_{W,C}$ und $I_{B,C}$ weitere Informationen stecken, kann man diese durch zusätzliche Auswerteverfahren wiedergewinnen.

Wurde festgestellt, daß der Drehstrommotor 6 nicht stillsteht, kann man mit einer Vorzeichenüberprüfung der Blindstromkomponente $i_{B,A}$ der Phase A und der Blindstromkomponente $i_{B,C}$ der Phase C feststellen, ob ein rechts herum oder links herum drehender Motor 6 vorliegt. Die Bedingungen für einen rechts herum drehenden Motor 6 lauten:

$$I_{B,A \,|\, t=10\% \; TA} < 0,$$

$$I_{B,C \,|\, t=10\% \; TC} > 0$$

Die Bedingungen für ein links herum drehenden Motor 6 lauten:

$$I_{B,A \,|\, t=10\% \; TA} > 0,$$

$$I_{B,C \,|\, t=10\% \; TC} < 0$$

Somit erhält man ohne aufwendige Auswertung eine zusätzliche Information über die Drehrichtung eines nicht stillstehenden Drehstrommotors 6. Liegt ein rechts herum drehender Motor 6 vor, so wechselt das Ausgangssignal $S_{DR}$ der Auswerteeinrichtung 38 vom Low-Zustand in den High-Zustand.

Wenn festgestellt wurde, welche Drehrichtung der nicht stillstehende Drehstrommotor 6 hat, kann man mit Hilfe von bekannten Rechenoperationen wie Fouriertransformation oder Autokorrelationsfolge die Frequenzen der abgespeicherten Zeitverläufe der Stromkomponenten $i_{B,A}$, $i_{W,C}$ und $i_{B,C}$ bestimmt werden. Liegen diese drei ermittelten Frequenzwerte annähernd beieinander, so kann für einen noch folgenden SUCH-Vorgang statt bei f$_{max}$ bei einer Frequenz beginnen, die geringfügig über dem arithmetischen Mittelwert oder dem Maximalwert der Frequenzen der Stromkomponenten $i_{W,C}$ und $i_{B,C}$ in der zweiten aktiven Phase C liegt. Damit kann der Suchvorgang der drehenden Drehfeldmaschine 6 verkürzt werden. Eine Startfrequenz $S_{SF}$ größer als die ermittelten Frequenzen soll verhindern, daß der Antrieb während des Suchvorgangs generatorisch wird und Energie in den Spannungszwischenkreis 4 zurückspeist. Dies hätte zur Folge, daß der Umrichter mit Störung "Überspannung" abschaltet.

**Patentansprüche**

1. Verfahren zur Stillstandserkennung beim Wiederanlassen eines stromrichtergespeisten Drehstrommotors (6) ohne Drehzahlgeber, wobei während einer ersten aktiven Phase (A), in der ein Gleichstrom in einer Zuleitung des Drehstrommotors (6) eingeprägt wird, und einer zweiten aktiven Phase (C), in der der stromrichtergespeiste Drehstrommotor (6) an seinen Klemmen kurzgeschlossen wird, jeweils der zeitliche Verlauf des Motorstroms (i) gemessen und dessen orthogonale Stromkomponenten ($i_{W,A}$, $i_{B,A}$, $i_{W,C}$, $i_{B,C}$) aufgezeichnet werden, wobei in einer passiven Phase (B), die die erste aktive Phase (A) von der zweiten aktiven Phase (C) entkoppelt, der Drehstrommotor (6) leerläuft, wobei die aufgezeichnete Wirkstromkomponente ($i_{W,C}$) der zweiten aktiven Phase (C) derart ausgewertet wird, daß bei Überschreitung des Mittelwertes ($\overline{I_{W,C}}$) der Wirkstromkomponente ($i_{W,C}$) und bei Überschreitung des Endwertes ($I_{W,C}$) der Wirkstromkomponente ($i_{W,C}$) jeweils über einen vorbestimmten Grenzwert feststeht, daß der Drehstrommotor (6) stillsteht.

2. Verfahren nach Anspruch 1, wobei die aufgezeichneten Verläufe der Blindstromkomponente ($i_{B,A}$) der ersten aktiven Phase (A), der Wirkstromkomponente ($i_{W,C}$) und der Blindstromkomponente ($i_{B,C}$) der zweiten aktiven Phase (C) derart ausgewertet werden, daß jeweils bei Überschreitung der berechneten Mittelwerte der Stromkomponentenbeträge ($|\overline{I_{B,A}}|$, $|\overline{I_{W,C}}|$, $|\overline{I_{B,C}}|$) jeweils über einen vorbestimmten Grenzwert feststeht, daß der Drehstrommotor (6) stillsteht.

3. Verfahren nach Anspruch 1, wobei der Gleichstrom mittels des Stromrichters (2) gesteuert eingeprägt wird, indem diesem Stromrichter (2) eine Stellgröße zugeführt wird, deren Amplitude in Abhängigkeit des Motornennstromes ($i_{mot,n}$) und eines Gesamtwiderstandes ($R_{ges}$) des Antriebs vorbestimmt ist.

4. Verfahren nach Anspruch 1, wobei der Gleichstrom mittels des Stromrichters (2) geregelt eingeprägt wird, indem diesem Stromrichter (2) eine Stellgröße zugeführt wird, die gleich einer Stellgröße einer Stromregelung ist, mit der der Motorstrom (i) auf einen Stromsollwert ($i_n$) geregelt ist.

5. Verfahren nach Anspruch 1, wobei die zeitliche Dauer (TA) der ersten aktiven Phase (A) so bemessen ist, daß sich ein stationärer Stromendwert einstellen kann.

6. Verfahren nach Anspruch 1, wobei die zeitliche Dauer (TC) der zweiten aktiven Phase (C) größer gleich dem mehrfachen Reziprokwert der Nennfrequenz ($f_{mot,n}$) des Drehstrommotors (6) ist.

7. Verfahren nach Anspruch 1, wobei die zeitliche Dauer (TB) der passiven Phase (B) so bemessen ist, daß der Ständerstrom des Drehstrommotors (6) zu Null wird.

8. Verfahren nach Anspruch 1, wobei aus zwei gemessenen Phasenstromverläufen ($i_R, i_T$) der Motorstromverlauf (i) bestimmt wird, der dann mittels einer Koordinatentransformation in orthogonale Stromkomponentenverläufe ($i_W$, $i_B$) gewandelt wird.

9. Verfahren zur Drehrichtungserkennung beim Wiederanlassen eines stromrichtergespeisten Drehstrommotors (6) ohne Drehzahlgeber, bestehend aus den Verfahrensschritten nach Anspruch 1, wobei die aufgezeichneten Blindstromkomponenten ($i_{B,A}; i_{B,C}$) der ersten aktiven Phase (A) und der zweiten aktiven Phase (C) derart ausgewertet werden, daß bei einem negativen Vorzeichen des Augenblickwertes der Blindstromkomponente ($I_{B,A}$) am Anfang der ersten aktiven Phase (A) und einem positiven Vorzeichen des Augenblickwertes der Blindstromkomponente ($I_{B,C}$) am Anfang der zweiten aktiven Phase (C) ein rechts herum drehender Motor (6) vorliegt bzw. bei umgekehrten Vorzeichen der Augenblickswerte deren Blindstromkomponenten ($I_{B,A}; I_{B,C}$) ein links herum drehender Motor (6) vorliegt.

10. Verfahren zur Festlegung einer Startfrequenz eines Suchvorgangs beim Wiederanlassen eines stromrichtergespeisten Drehstrommotors (6) ohne Drehzahlgeber, bestehend aus den Verfahrensschritten nach Anspruch 1, wobei aus den aufgezeichneten Verläufen der Blindstromkomponenten ($i_{B,A}; i_{B,C}$) in der ersten aktiven Phase (A) und der zweiten aktiven Phase (C) und dem aufgezeichneten Verlauf der Wirkstromkomponente ($i_{W,C}$) in der zweiten aktiven Phase (C) mittels arithmetischer Operationen je ein Frequenzwert errechnet wird, wobei diese miteinander verglichen werden, wobei bei annähernder Gleichheit ein Suchlauf bei einem Frequenzwert größer als der arithmetische Mittelwert der Frequenzwerte der zweiten aktiven Phase (C) ist.

11. Vorrichtung (22) zur Durchführung des Verfahrens nach Anspruch 1 zur Stillstandserkennung beim Wiederanlassen eines stromrichtergespeisten Drehstrommotors (6) ohne Drehzahlgeber, bestehend aus einem Koordinatenwandler (24), zwei Doppelschaltern (26, 28), vier Speichereinheiten (30,32,34,36), einer Auswerteeinrichtung (38) und einer Ablaufsteuerung (40), wobei die Doppelschalter (26,28) eingangsseitig jeweils mit dem Koordinatenwandler (24) und ausgangsseitig mit den Speichereinheiten (30,32,34,36) verknüpft sind, die ausgangsseitig mit der Auswerteeinrichtung (38) elektrisch leitend verbunden sind, wobei die Ausgänge dieser Auswerteeinrichtung (38) mit der Ablaufsteuerung (40) verknüpft sind, die ausgangsseitig jeweils mit einem Steuereingang der Doppelschalter (26,28) und einer Steuer- und Regeleinrichtung (8,10) eines Stromrichters verbunden ist.

12. Vorrichtung (22) nach Anspruch 11, wobei die Auswerteeinrichtung (38) und die Ablaufsteuerung (40) eine Baueinheit bilden.

13. Vorrichtung (22) nach Anspruch 12, wobei als Baueinheit ein Mikroprozessor vorgesehen ist.

## Claims

1. Standstill recognition method upon restarting a converter-fed three-phase a.c. motor (6) without a tachometer, whereby during a first active phase (A), in which a direct current is impressed in a feeder of the three-phase a.c. motor (6), and during a second active phase (C), in which the converter-fed three-phase a.c. motor (6) is shorted at its terminals, in each case the time characteristic of the motor current (i) is measured and orthogonal current components ($i_{W,A}$, $i_{B,A}$, $i_{W,C}$, $i_{B,C}$) thereof are recorded, whereby during a passive phase (B), which separates the first active phase (A) from the second active phase (C), the three-phase a.c. motor (6) operates at no load, whereby the recorded active-current component ($i_{W,C}$) of the second active phase (C) is evaluated in such a way that, when the mean value ($\overline{i_{W,C}}$) of the active-current component ($i_{W,C}$) and the end value ($i_{W,C}$) of the active-current component ($i_{W,C}$) each exceed a predetermined limit value, it is certain that the three-phase a.c. motor (6) is at a standstill.

2. Method according to claim 1, whereby the recorded characteristics of the reactive-current component ($i_{B,A}$) of the first active phase (A), of the active-current component ($i_{W,C}$) and of the reactive-current component ($i_{B,C}$) of the second active phase (C) are evaluated in such a way that, when the calculated mean values of the current component amounts ($|\overline{I_{B,A}}|$, $|\overline{I_{W,C}}|$, $|\overline{I_{B,C}}|$) each exceed a predetermined limit value, it is certain that the three-phase a. c. motor (6) is at a standstill.

3. Method according to claim 1, whereby the direct current is impressed by the converter (2) in a controlled manner in that said converter (2) is supplied with a manipulated variable, the amplitude of which is predetermined in dependence upon the rated motor current ($i_{mot,n}$) and a total resistance ($R_{ges}$) of the drive.

4. Method according to claim 1, whereby the direct current is impressed by the converter (2) in a regulated manner in that said converter (2) is supplied with a manipulated variable, which is equal to a manipulated variable of a current regulator, by means of which the motor current (i) is regulated to a setpoint current value ($i_n$).

5. Method according to claim 1, whereby the duration (TA) of the first active phase (A) is dimensioned so as to allow adjustment of a stationary current end value.

6. Method according to claim 1, whereby the duration (TC) of the second active phase (C) is greater than or equal to the multiple reciprocal value of the nominal frequency ($f_{mot,n}$) of the three-phase a.c. motor (6).

7. Method according to claim 1, whereby the duration (TB) of the passive phase (B) is so dimensioned that the stator current of the three-phase a.c. motor (6) is brought to zero.

8. Method according to claim 1, whereby from two measured phase current characteristics ($i_R$, $i_T$) the motor current characteristic (i) is determined, which is then converted by means of a coordinate transformation into orthogonal current component characteristics ($i_W$, $i_B$).

9. Method of detecting the direction of rotation upon restarting a converter-fed three-phase a.c. motor (6) without a tachometer, comprising the method steps according to claim 1, whereby the recorded reactive-current components ($i_{B,A}$; $i_{B,C}$) of the first active phase (A) and of the second active phase (C) are evaluated in such a way that a negative sign of the instantaneous value of the reactive-current component ($I_{B,A}$) at the start of the first active phase (A) and a positive sign of the instantaneous value of the reactive-current component ($I_{B,C}$) at the start of the second active phase (C) indicate a clockwise rotating motor (6) and sign inversion of the instantaneous values of said reactive-current components ($I_{B,A}$; $I_{B,C}$) indicates an anti-clockwise rotating motor (6).

10. Method of fixing a start frequency of a search process upon restarting a converter-fed three-phase a.c. motor (6) without a tachometer, comprising the method steps according to claim 1, whereby arithmetic operations are used to calculate a frequency value in each case from the recorded characteristics of the reactive-current components ($i_{B,A}$; $i_{B,C}$) in the first active phase (A) and the second active phase (C) and from the recorded characteristic of the active-current component ($i_{W,C}$) in the second active phase (C), whereby said frequency values are compared with one another, whereby given approximate equality a search run is at a frequency value greater than the arithmetic mean value of the frequency values of the second active phase (C).

11. Device (22) for effecting the standstill recognition method according to claim 1 upon restarting a converter-fed three-phase a.c. motor (6) without a tachometer, comprising a coordinate converter (24), two double switches (26, 28), four memory units (30, 32, 34, 36), an evaluation device (38) and a sequence controller (40), wherein the double switches (26, 28) are connected at the input side in each case to the coordinate converter (24) and at the output side to the memory units (30, 32, 34, 36), which at the output side are conductively connected to the evaluation device (38), wherein the outputs of said evaluation device (38) are connected to the sequence controller (40), which is connected at the output side in each case to a control input of the double switches (26, 28) and a control and regulating device (8, 10) of a converter.

**12.** Device (22) according to claim 11, wherein the evaluation device (38) and the sequence controller (40) form a structural unit.

**13.** Device (22) according to claim 12, wherein, as a structural unit, a microprocessor is provided.

**Revendications**

**1.** Procédé pour la reconnaissance de l'arrêt lors du redémarrage d'un moteur triphasé (6) alimenté par un convertisseur et sans capteur de vitesse, selon lequel pendant une première phase active (A), pendant laquelle on injecte un courant continu dans un conducteur d'alimentation du moteur triphasé (6), et pendant une seconde phase active (C), pendant laquelle on court-circuite le moteur triphasé (6) alimenté par convertisseur est à ses bornes, on mesure à chaque fois la courbe en fonction du temps du courant de moteur (i) et on enregistre ses composantes orthogonales de courant ($i_{W,A}$, $i_{B,A}$, $i_{W,C}$, $i_{B,C}$), selon lequel pendant une phase passive (B), qui sépare la première phase active (A) de la seconde phase active (C), le moteur triphasé (6) tourne à vide, selon lequel on évalue la composante active de courant (iW,C) enregistrée de la seconde phase active (C) de telle sorte que l'on constate que le moteur triphasé (6) est à l'arrêt si la moyenne $\overline{(i_{W,C})}$ de la composante active de courant ($i_{W,C}$) est supérieure à une valeur limite prescrite et si la valeur finale ($i_{W,C}$) de la composante active de courant ($i_{W,C}$) est supérieure à une valeur limite prescrite.

**2.** Procédé selon la revendication 1, selon lequel on évalue les courbes enregistrées de la composante réactive de courant ($i_{B,A}$) de la première phase active (A), de la composante active de courant ($i_{W,C}$) et de la composante réactive de courant ($i_{B,C}$) de la seconde phase active (C), de telle sorte que l'on constate que le moteur triphasé (6) est à l'arrêt, si les moyennes calculées des valeurs absolues des composantes de courant ($\overline{|I_{B,A}|}$, $\overline{|I_{W,C}|}$, $\overline{|I_{B,C}|}$) sont chacune supérieures à une valeur limite prescrite.

**3.** Procédé selon la revendication 1, selon lequel on injecte de manière commandée le courant continu au moyen du convertisseur (2) en envoyant à ce convertisseur (2) une grandeur de réglage dont l'amplitude est prescrite en fonction du courant nominal de moteur ($i_{mot,n}$) et d'une résistance globale ($R_{ges}$) du moyen d'entraînement.

**4.** Procédé selon la revendication 1, selon lequel on injecte de manière régulée le courant continu au moyen du convertisseur (2) en envoyant à ce convertisseur (2) une grandeur de réglage qui est égale à une grandeur de réglage d'une régulation de courant avec laquelle le courant de moteur (i) est réglé sur une valeur de consigne de courant ($i_n$).

**5.** Procédé selon la revendication 1, selon lequel la durée (TA) de la première phase active (A) est telle qu'une valeur finale stationnaire de courant peut s'établir.

**6.** Procédé selon la revendication 1, selon lequel la durée (TC) de la seconde phase active (C) est supérieure ou égale à un multiple de la valeur inverse de la fréquence nominale ($f_{mot,n}$) du moteur triphasé (6).

**7.** Procédé selon la revendication 1, selon lequel la durée (TB) de la phase passive (B) est telle que le courant statorique du moteur triphasé (6) devient nul.

**8.** Procédé selon la revendication 1, selon lequel on détermine à partir de deux courbes mesurées de courant de phase ($i_R$, $i_T$) la courbe de courant de moteur (i) que l'on transforme ensuite au moyen d'une transformation de coordonnées en des courbes de composantes orthogonales de courant ($i_W$, $i_B$).

**9.** Procédé pour la reconnaissance du sens de rotation lors du redémarrage d'un moteur triphasé (6) alimenté par convertisseur et sans capteur de vitesse, consistant en les étapes du procédé selon la revendication 1, selon lequel on évalue les composantes réactives de courant ($i_{B,A}$ ; $i_{B,C}$) enregistrées de la première phase active (A) et de la seconde phase active (C) de telle sorte qu'on sait que le moteur (6) tourne vers la droite si le signe de la valeur instantanée de la composante réactive de courant ($I_{B,A}$) au début de la première phase active (A) est négatif et si le signe de la valeur instantanée de la composante réactive de courant ($I_{B,C}$) au début de la seconde phase active (C) est positif et on sait que le moteur (6) tourne vers la gauche si les signes des valeurs instantanées ($I_{B,A}$ ; $I_{B,C}$) des mêmes composantes réactives de courant sont inversés.

**10.** Procédé pour la détermination d'une fréquence de démarrage d'une opération de recherche lors du redémarrage d'un moteur triphasé (6) alimenté par convertisseur et sans capteur de courant, consistant en les étapes du procédé selon la revendication 1, selon lequel on calcule une valeur de fréquence au moyen d'opérations arithmétiques à partir des courbes enregistrées des composantes réactives de courant ($i_{B,A}$ ; $i_{B,C}$) dans la première phase active (A) et dans la seconde phase active (C) et à partir de la courbe enregistrée de la composante active de courant ($i_{W,C}$) de la seconde phase active (C), selon lequel on compare ces valeurs de fréquences entre elles et selon lequel, lorqu'il y a égalité approximative, on commence une opération de recherche avec une valeur de fréquence supérieure à la moyenne arithmétique des valeurs de fréquences de la seconde phase active (C).

11. Dispositif (22) destiné à la mise en oeuvre du procédé selon la revendication 1 pour la reconnaissance de l'arrêt lors du redémarrage d'un moteur triphasé (6) alimenté par convertisseur et sans capteur de vitesse, constitué d'un transformateur de coordonnées (24), de deux interrupteurs doubles (26, 28), de quatre unités de mémoire (30, 32, 34, 36), d'un dispositif d'évaluation (38) et d'une commande séquentielle (40), les interrupteurs doubles (26, 28) étant reliés en entrée chacun au transformateur de coordonnées (24) et en sortie aux unités de mémoire (30, 32, 34, 36), qui sont reliées en sortie de manière électriquement conductrice au dispositif d'évaluation (38), les sorties de ce dispositif d'évaluation (38) étant reliées à la commande séquentielle (40), qui est reliée en sortie à une entrée de commande des interrupteurs doubles (26, 28) et d'un dispositif de commande et de régulation (8, 10) d'un convertisseur.

12. Dispositif (22) selon la revendication 11, dans lequel le dispositif d'évaluation (38) et la commande séquentielle (40) forment une unité modulaire.

13. Dispositif (22) selon la revendication 12, dans lequel il est prévu comme unité modulaire un microprocesseur.

**FIG 1**

FIG 2

FIG 3

FIG 4

FIG 5

FIG 6

**FIG 7**

FIG 8

FIG 9

FIG 10